# EUROPEAN PATENT SPECIFICATION

(11) **EP 1 778 994 B1**
(45) Date of publication and mention of the grant of the patent: **18.03.2009**
(21) Application number: 05794132.0
(22) Date of filing: 11.08.2005
(51) Int. Cl.: F16D 11/04

(54) **CHANGE SPEED TRANSMISSIONS WITH A SHIFT COUPLER**
WECHSELGETRIEBE MIT UMSCHALTKUPPLUNG
BOITES DE VITESSES AVEC UN COUPLEUR DE VITESSE

(30) Priority: 20.08.2004 GB 0418645; 27.08.2004 GB 0419183
(43) Date of publication of application: 02.05.2007
(73) Proprietor: RICARDO UK LIMITED, Shoreham-by-Sea, West Sussex BN43 5FG (GB)
(72) Inventor: BENNETT, John Sebastian, Leamington Spa, Warwickshire CV33 9PE (GB); BURKE, John Pius, Leamington Spa, Warwickshire CV31 1UD (GB)
(74) Representative: Chettle, Adrian John
(86) International application number: PCT/GB2005/003159
(87) International publication number: WO 2006/018613

(56) References cited:
- GB-A- 909 254
- US-A- 3 643 767

## Description

This invention concerns a device for changing ratio in a multi-speed transmission, and particularly to a gear transmission of a motor vehicle.

Conventional transmissions of motor vehicles employ a single dry plate clutch and a gearbox having several pairs of gears arranged between parallel shafts. Generally speaking one gear of each pair is driven from an input shaft whilst the other gear of each pair is loose on an output shaft. The loose gears are coupled in turn to the output shaft by a selector mechanism, thus transmitting drive from the input to the output at the desired ratio.

Such transmissions are relatively simple and reliable. For reasons of maximizing both performance and fuel economy, it has become necessary to increase the number of ratios in a car transmission so that whilst five forward ratios is common, six or seven are sometimes provided.

The increased number of ratios is problematic, especially for front-wheel drive vehicles having a transversely mounted engine and an in-line transmission, because the space between the wheels is restricted by steering and suspension requirements, and also by the requirement for crash absorbing members to project from passenger structure in a generally straight line. Thus it is desirable to provide a transmission of short overall length. Such a transmission would also be beneficial for rear drive vehicles by reducing intrusion into the passenger space.

Another requirement of vehicle transmissions is that a common mechanical arrangement should be adaptable to manual, semi-automatic or fully automatic control, with the possibility of up-shifts under load to achieve maximum vehicle acceleration. Ratio changes under load are also desirable for other machinery where a loss of momentum cannot be accepted, for example during tractor ploughing. Such ratio changes should occur as quickly as possible so as to ensure that torque is continuously transmitted to the output shaft. The transmission should preferably be adaptable to a large number of forward ratios.

A very rapid ratio change under load can be achieved using a twin input transmission, in which two input shafts are driven alternately via respective clutches. In such a transmission the 'odd' ratios are associated with one input shaft and the 'even' ratios with the other input shaft; the next up or down ratio of the sequence can be pre-selected, and a hot shift' achieved by releasing one clutch as the other is engaged. Sophisticated electronic controls are required to prevent drive via both clutches at the same time, or momentarily via neither clutch.

A prior art shift coupler is disclosed in US 3 643 767.

Such twin input transmissions can be rather bulky because multi-plate wet clutches are preferred, and are thus less suitable for front wheel drive cars with many transmission ratios because the transmission is relatively long.

It would be desirable to have a multi-speed transmission with a single clutch and single input, which is capable of rapid ratio change under load, and which can be adapted to a short overall length. In a preferred embodiment the transmission ratios should be defined by conventional pairs of gears operating between parallel shafts.

According to the invention there is provided a shift coupler operable to connect one of two rotary drive members to a rotary shaft, the shaft and drive members having a common rotary axis and the shift coupler being arranged between the drive members, wherein the shift coupler comprises:
a first coupling member rotationally fast with said shaft and movable parallel to said axis between said drive members to engage one or other drive members for torque transmission;
a second coupling member, radially spaced from the first coupling member, rotationally fast with said shaft and movable parallel to said axis between said drive members to engage one or other drive member for torque transmission;
each coupling member being movable to drive one of said drive members in one direction, and the other of said drive members in the opposite direction, each drive member being drivable in one direction by one of said coupling members, and in the other direction by the other of said coupling members;
and the shift coupler further including a shift member movable parallel to said axis and having a toggle pivoted thereon, one end of said toggle engaging one coupling member, and the other end of said toggle engaging the other coupling member such that pivoting of the toggle results in relative axial movement of said coupling members.

A shift coupler according to the invention can be arranged to drive input shafts of a twin input transmission, or to alternately couple gear pairs to driving shaft. In each case a single clutch connection to the motive power source is sufficient, for example via a single dry plate clutch to the crankshaft of an internal combustion engine. Other clutch types, for example a multi-plate wet clutch, are possible.

The invention is particularly applicable to a conventional gear transmission of a motor vehicle having gear pairs between parallel shafts, but is also applicable to equivalent transmissions having for example pulleys and vee belts, or sprockets and chains.

In the case of a typical twin input transmission, the drive members are coupled to respective input shafts whereas the coupling members are rotationally fast with the output shaft of the motive power unit, such as an i.c. engine, via a clutch. Thus the shift coupler is arranged immediately downstream of the usual clutch, and can alternately couple one or other input shaft, the transmission ratios being selectable in a conventional manner, via, for example, synchromesh hubs. A shift sleeve for the coupler can be co-axially located about the input shafts, and a release sleeve for the clutch located about the shift sleeve.

In the case of a transmission having a single input shaft downstream of a clutch, shift couplers according to the invention can be arranged between two adjacent sets of gears to provide a torque path through one or other gear set to the output shaft. In a many speed transmission a plurality of shift couplers is arranged in sequence so that the transmission is 'multi-pass' - that is to say that individual gears are not confined to a single ratio, but may form part of the torque path for several ratios. In this way the number of gears can be reduced for a predetermined number of speed ratios.

A feature of the shift coupler of the invention is that a neutral position is, in use, not practicably possible; this is because the toggle tends to one or other position, depending on the pivot point. In fact the shift mechanism should be designed to prevent a vehicle user from any attempt to find a neutral position by manipulation of a manual gear shift mechanism. Suitable over-centre, or spring biased detent arrangements can be devised by the skilled person. Another feature of transmissions incorporating the shift coupler of this invention, is that ratio changes can generally be effected by shifting one coupler only, thus ensuring a relatively simple selection system.

A particular advantage of the invention is that ratio shifting under load is possible, and the invention is widely applicable to all mechanisms where such a ratio change is desirable. The invention allows a compact transmission with short axial length.

Selection of ratios may be by manual mechanism, or under power by for example electric or hydraulic actuators. Fully automatic selection may be provided by means of a suitable logic device having conventional inputs of e.g. road speed, engine speed, throttle position etc.

In use the toggle is adapted to pivot about one or other end dependent on which coupling member has the greatest resistance to movement. Thus it can be arranged that one coupling member transmits driving torque whilst the other is free of driving torque and shiftable by the shift member. The toggle may be mechanical, or may be provided by other means, such as a pneumatic or hydraulic actuator. The important feature of the toggle is that load is applied to both coupling members, but only one coupling member is in the torque flow path, thus allowing the other coupling member to shift axially.

In a preferred embodiment each coupling member comprises opposed rings concentric about the rotary axis thereof and connected by a plurality of tie bars, each ring having axially outwardly facing teeth for engagement with teeth of the rotary drive members, and the teeth of each ring having a substantially perpendicular drive face adapted to drive in opposite directions. Typically the teeth of each ring have a saw-tooth appearance.

Furthermore the first and second coupling members are preferably arranged one within the other in a substantially common plane for connection to one or other drive member, the teeth of each ring being oppositely directed at each side. Thus on the side adjacent each drive member, one coupler has teeth adapted for drive clockwise, whereas the other coupler has teeth adapted for counter-clockwise drive, and vice versa.

In the preferred embodiment the corresponding teeth of the drive members are substantially radial, and preferably single radial teeth are engageable by the teeth of both coupling members. The teeth of the drive members have substantially perpendicular faces for engagement with the corresponding drive faces of the teeth of the coupling members.

In a preferred embodiment the shift coupler is annular and surrounds the coupling members, a plurality of radially inwardly directed arms extending between the rings of each coupling member to support mechanical toggles thereon. Preferably the toggles are each arranged for pivoting about a radius of the rotary shaft so that each toggle has an outer end engaging one coupling member, and an inner end engaging the other coupling member. Preferably the toggles have substantially cylindrical ends in sliding contact with suitably shaped abutments of the respective rings, so as to give a line contact.

In a further aspect the invention provides a single layshaft gear transmission wherein the input shaft is arranged to drive directly to a co-axial intermediate shaft via a first shift coupler, and from the intermediate shaft directly to a co-axial output shaft via a second shift coupler. Each of these shift couplers is also shiftable axially in the opposite direction to engage a gear pair associated with the layshaft. The intermediate shaft has rotatable thereon the driven gears of two gear pairs, and a third shift coupler therebetween to couple these driven gears on demand to the intermediate shaft.

Furthermore the layshaft is also divided into two co-axial parts connectable by a shift coupler, two driving gears being associated with each layshaft part.

Other features of the invention will be apparent from the following description of a preferred embodiment shown by way of example only in the accompanying drawings in which:-
Fig. 1 is a schematic sectional view through part of a gear transmission incorporating the invention;
Fig. 2 is a schematic developed plan view of part of two gear wheels and an outer coupler of the invention;
Fig. 3 corresponds to Fig. 2 but shows the gear wheels and an inner coupler of the invention;

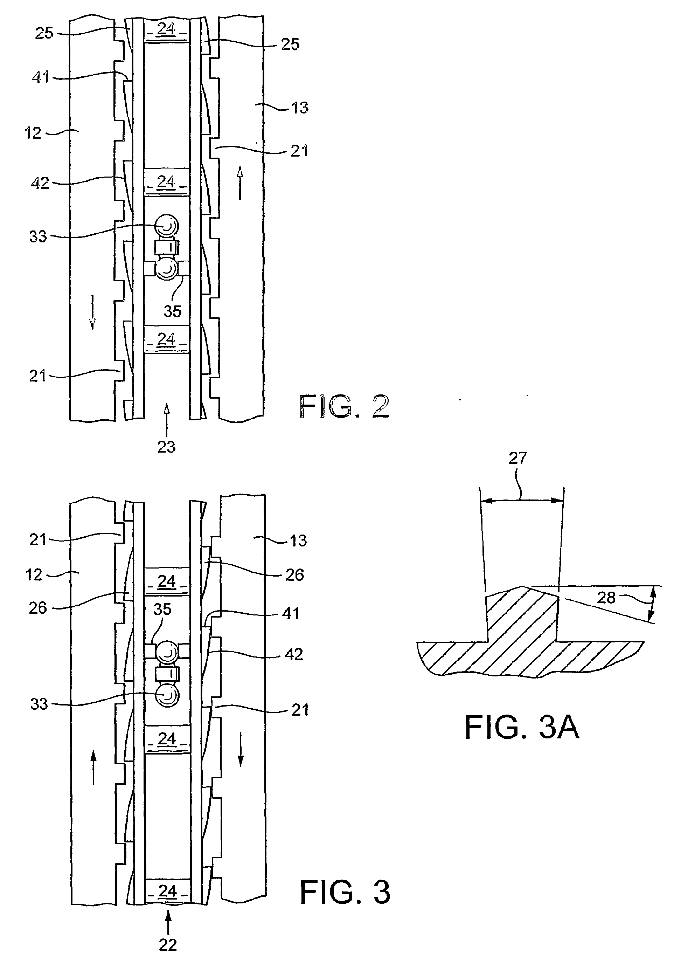

Fig. 3 a shows an enlarged section through the radial tooth of a gear wheel;

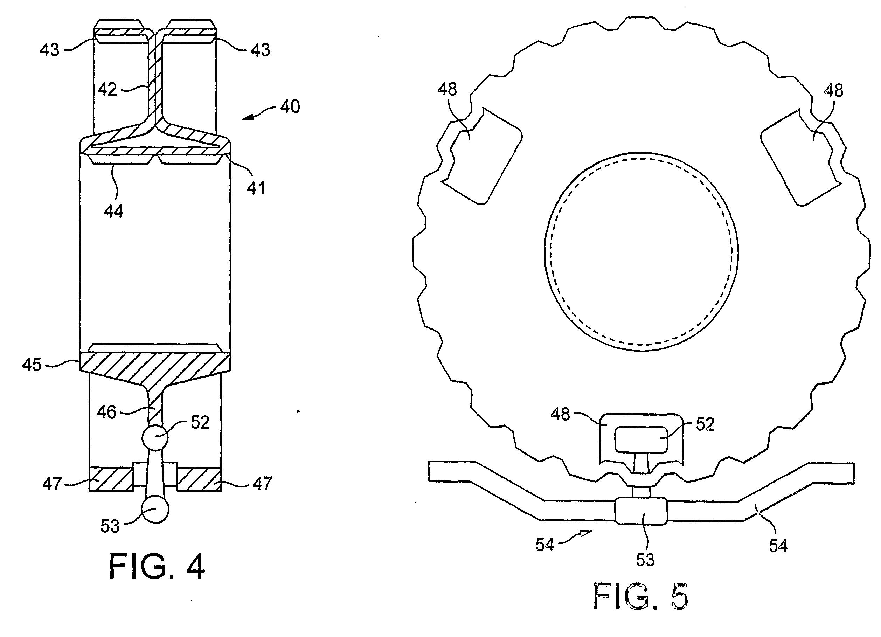

Fig. 4 shows an alternative hub design in axial section;
Fig. 5 shows the hub of Fig. 4 in elevation;

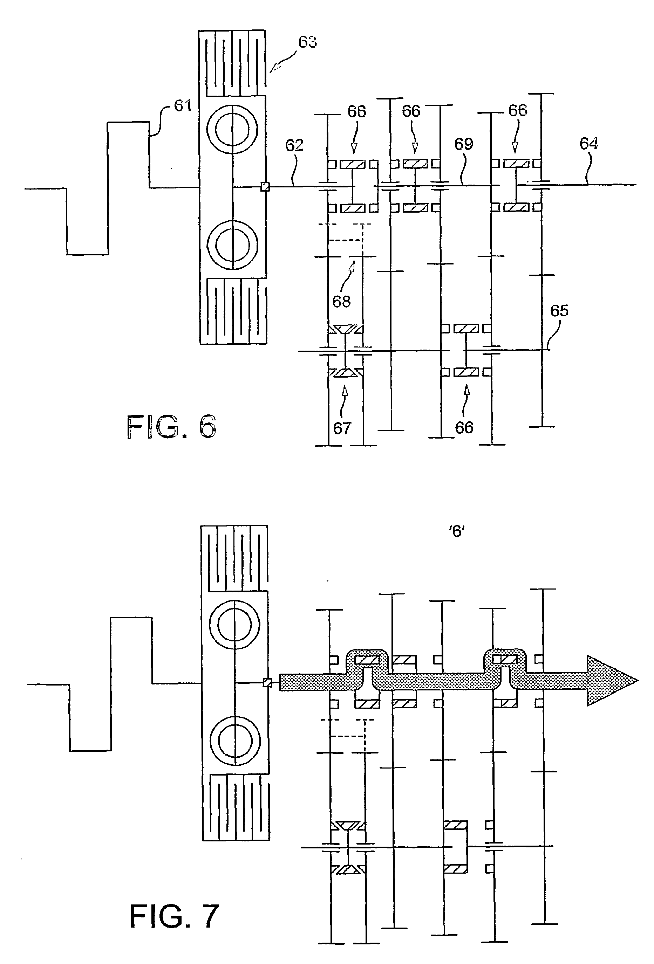

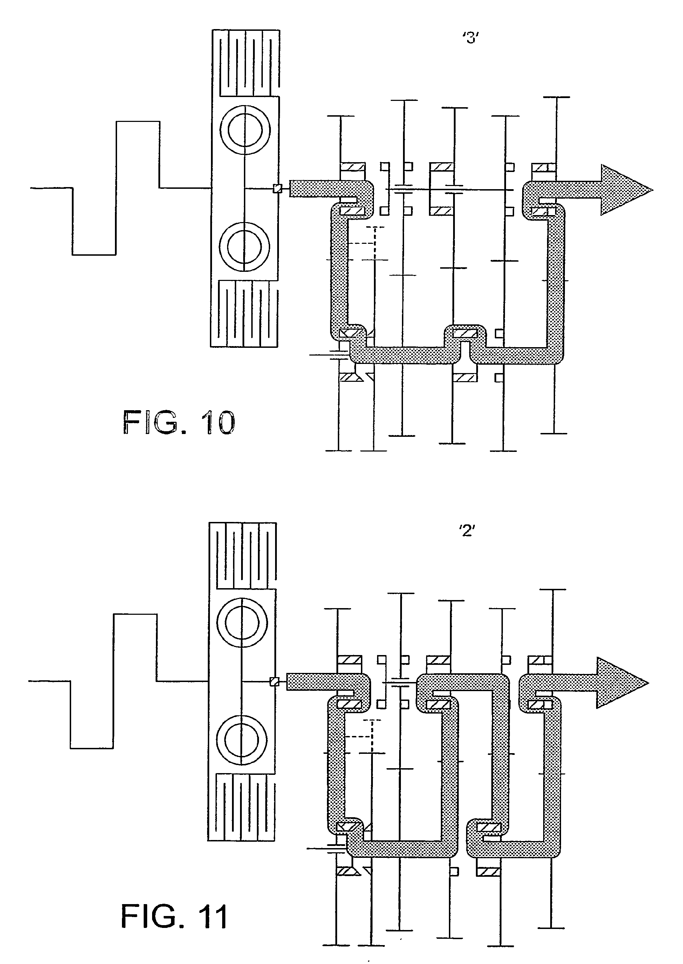

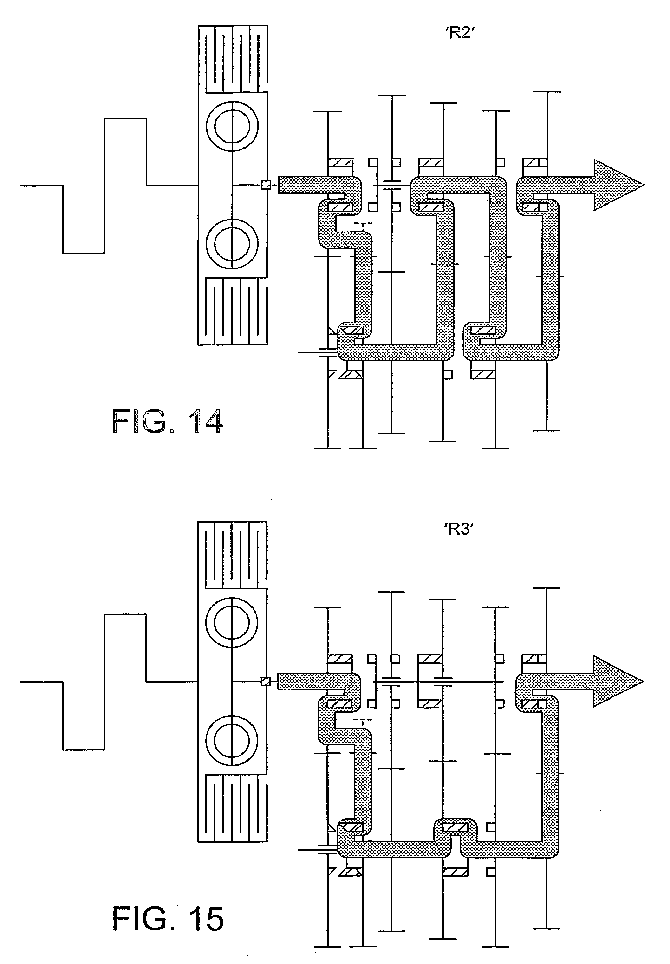

Figs. 6-15 show schematically a transmission incorporating the invention and having a single input shaft; and

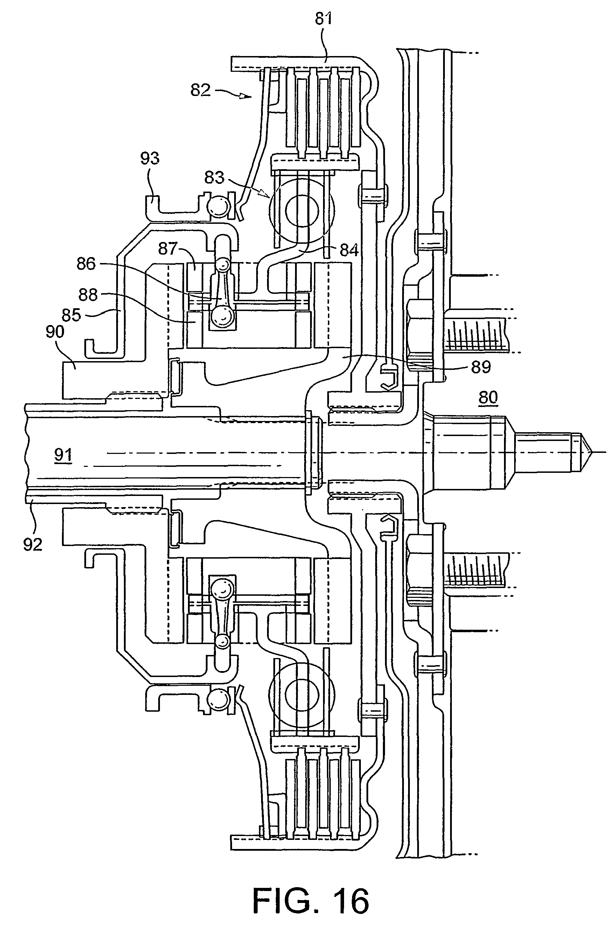

Fig. 16 shows in transverse section a shift coupler according to the invention for a twin input transmission.

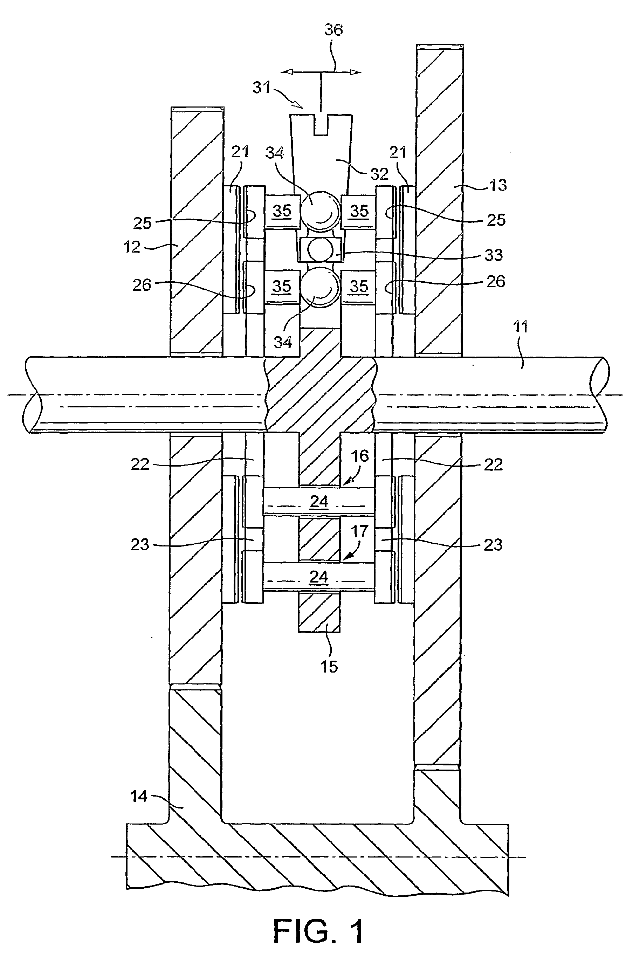

Fig. 1 illustrates schematically one embodiment of the invention.

An output shaft 11 has two gear wheels 12,13 rotatable thereon; the gear wheels are of different diameter and thus different ratio. A parallel countershaft (not illustrated) carries a driving gear cluster 14. Accordingly rotation of the cluster 14 rotates the gear wheels 12,13 at different speeds.

Each gear wheel 12,13 has a circumferential array of radial teeth 21 on the facing flanks. Adjacent each set of teeth 21 are inner and outer annular couplers 22,23 which are respectively connected by tie bars 24. Each coupler has a circumferential array of radial teeth 25,26 adapted to mesh with the corresponding teeth 21 on the gear wheels 12,13.

The output shaft 11 has several radially extending arms 15 in each of which two radially spaced apertures 16,17 are provided. The tie bars 24 are a close sliding fit in a respective aperture 16,17.

It will be understood that by sliding the tie bars together from side to side, the teeth 21,25,26 can be engaged so as to make one or other gear wheel 12,13 fast for rotation with the arms 15 via the tie bars 24, and hence with the output shaft 11. It will also be understood that the tie bars 24 may be moved in sequence, as will be further explained below.

A shift ring 31 comprises an annulus having radially inwardly directed arms 32 which extend between the arms 15 of the output shaft. On each arm 32 is a freely pivotable toggle 33 having cylindrical ends 34 engageable with axially directed projections 35 of each coupler 22,23.

The shift ring 31 is mounted so as to be freely movable axially, as represented by double headed arrow 36, the pivot point of the toggle 33 'floating' so that the point of articulation is one or other of the cylindrical ends 34 depending on the resistance to movement of the respective inner and outer projections 35.

Thus, for example, with the inner coupler 22 as viewed and the outer coupler 23 engaged with gear wheel 12, movement of the shift ring 31 to the right may have one of two consequences. If the resistance to movement of the outer coupler 23 is greatest, the inner coupler 22 will move rightwards to engage the gear wheel 13. On the other hand if resistance to movement of the inner coupler 22 is greatest, the outer coupler 23 will move rightwards to disengage the gear wheel 12.

The resistance to movement of each coupler is dependent on forces acting between the teeth 21,25,26 as will become apparent.

Figs. 2 and 3 illustrates schematically an arrangement of teeth 25,26 of the couplers, and of teeth 21 of the adjacent gear wheels.

As illustrated, neither coupler 22,23 is engaged. In practice this would not occur, one or other coupler being engaged according to the pivot point of the toggle. Figs. 1-3 show a theoretical mid-position for the purpose of explanation.

With reference to Fig. 2, the opposing faces of gear wheels 12, 13 have radial teeth 21 of approximately square section. In a practical embodiment, the faces of the teeth will have rake and flank angles to ensure smooth engagement and disengagement.

Typically the torque transmitting faces of the teeth 21,25,26 will have a reverse angle 27 of 3-4° so as to tend to hold them in engagement. The outer faces of the teeth 21 will typically have an apex with flank angles 28 of around 10°. Fig. 3a shows in section a typical tooth 21; the corresponding faces of teeth 25,26 should have matching inclinations so as to give face contact.

The outer coupler 23 has teeth 25 on either side and which face in opposite directions. These teeth have a generally perpendicular engagement face 41 (matching the side face of radial tooth 21), and a gently sloping trailing face 42 (matching the respective end face of radial tooth 21). Several tie bars 24 are illustrated along with a toggle 33 and adjacent projections 35.

As will be apparent a sideways shift of the outer coupler 23 will engage one or other set of teeth 25 with the respective gear wheel 12,13. Drive will be transmitted via the teeth 25 in opposite directions so that gear wheel 12 will drive down (as viewed) and gear wheel 13 will drive up; these drive directions are represented by the respective arrows.

In contrast the trailing faces 42 ensure that drive is not possible in the respective opposite directions, the faces 42 simply ratcheting over the teeth 21 in the event that the toggle exerts a sideways force.

Fig. 3 represents inner coupler 22; the gear wheels 12,13 are as illustrated in Fig. 2 because the teeth 21 are common. It will be noticed that the coupler teeth 26 face in opposite directions to those of Fig. 2, so that drive to the respective gear wheel is 'down' for gear wheel 12, and 'up' for gear wheel 13.

Operation of the shift ring 31 to change speed ratio is as follows, from the initial state where drive is via gear wheel 13.

In the initial state, the shift ring 31 is fully to the right, both couplers 22,23 being fully engaged with gear wheel 13. Drive is assumed to be via the teeth of outer coupler 23 whereas inner coupler is engaged but not driving (by virtue of the trailing faces of respective teeth 26).

Movement of the shift ring to the left results in leftwards movement of the inner coupler 22. The teeth of the inner coupler are not under load, and thus free movement is assured. In contrast, the teeth of the outer coupler are driving, and thus impose a resistance to lateral movement. In consequence of this the toggle(s) pivot about their outer spherical ends 34 to push the inner coupler to the left.

It will be appreciated that the gear wheels 12,13 are driven by the gear cluster 14 at different speeds and thus the inner coupler cannot move fully to the left. However if at this point the drive to the gear cluster is momentarily relaxed, for example by releasing an input shaft clutch, the leftwards pressure on the shift ring will permit the inner coupler to engage gear wheel 12. Furthermore, the drag imposed on teeth 25 of the outer coupler will also momentarily relax, allowing the cylindrical ends 34 of the toggles to act as pivot. Consequently further leftward movement of the shift ring fully disengages the outer coupler from gear wheel 13, and engages it (in a non-driving manner) with gear wheel 12.

As soon as the inner coupler is engaged with the gear wheel 12, the input shaft clutch may be fully engaged, disengagement of the clutch not being necessary during disengaging movement of the outer coupler.

It will be readily appreciated that the invention permits a virtually full power (hot-) shift, the ratio change occurring as slip in the input shaft clutch is momentarily sufficient to allow the inner coupler to engage gear wheel 12. In fact, as will be described, an up-shift may not require release of the clutch.

A gear ratio change in the opposite direction, from gear wheel 12 to gear wheel 13, occurs in substantially the same manner.

The distinguishing features of the invention are that only one coupler is transmitting drive, so that the other coupler is free to be shifted by the shift ring. Furthermore, the direction of the teeth of the couplers is chosen to ensure that the 'free' coupler cannot engage the non-driving gear so that the drives conflict. Also, the toggle is free to pivot about one or other end, and thus can automatically shift the 'free' coupler dependent on the drag imposed by the driving gear.

A transmission according to the invention has certain characteristics depending on whether the ratio change is an up-shift or a down-shift, and whether the shift is under load, or during over-run.

In the case of a power-on up-shift, such as described above, the gear wheel 12 will be rotating faster than the gear wheel 13. Accordingly the inner coupler will immediately engage gear wheel 12, and take-up the drive, so that the outer coupler is no longer under drive torque. Such a shift can occur with only very momentary disengagement of the input shaft clutch, or even without disengagement of the clutch at all.

Similarly a down-shift on over-run (trailing throttle/no load) can also be made without clutch disengagement. These two kinds of gear shift are of course very common, and the transmission of the invention permits very rapid ratio changes.

Two other kinds of ratio change may occur; a power-on down-shift, and an up-shift on over-run.

In the first case, (shift from gear wheel 12 to gear wheel 13), the new ratio gear wheel 13 is running more slowly. As a consequence the teeth 25 will not engage, but will 'ratchet' over the teeth 21. In consequence a momentary disengagement of the input shaft clutch is necessary to relieve the load on teeth 26. Thus momentary disengagement also allows engine speed to increase sufficiently to match the speed of outer coupler 23 and gear wheel 13, so that a rapid shift is assured.

In the case of an over-run up-shift, a momentary clutch disengagement allows the engine to decelerate so that the speed of gear wheel 12 can match that of the inner coupler 22, and permit engagement under sideways load of the shift ring 31.

In the case of a gearbox having twin input shafts for connection to alternate gear ratios, it will be understood that the shift coupler of the invention is operable to provide almost instantaneous transfer of drive between the input shafts provided that the single clutch is adapted for momentary release when required. The shift coupler of the invention is compact, and can for example be located radially within a conventional vehicle clutch assembly, and within the axial length thereof.

A typical ratio change may have the following sequence:
1. Partial clutch disengagement so that friction torque is substantially the same as current engine torque (i.e. clutch slip imminent). This may be achieved by controlling clutch engagement pressure by reference to the usual engine map, or by creating a small measured slip - for example not exceeding 1%.
2. Shift the shift ring to engage the new ratio.
3. Momentarily disengage clutch to permit ratio shift to be completed (if necessary).
4. Re-engage the clutch to the previous friction torque level (if necessary).
5. Gradually increase clutch friction torque to the normal maximum.

When arranged in a transmission having twin input shafts, a saving of one clutch and the associated operating/control mechanism is provided. Drag from the 'idle' clutch is eliminated, along with the unpredictable engagement of the idle clutch. The mechanical arrangement of the invention may also improve reliability.

The arrangement of Fig. 1 shows how gear pairs of a twin shaft transmission can be coupled to transmit drive torque.

In the case of a shift coupler upstream of a twin input transmission, drive from a clutch will be taken via a drive member corresponding to arms 15, and from the radially outer rim. The arms 15 are represented by an annulus, and the shaft 11 replaced by co-axial input shafts of a twin input transmission, one each connected to drive members corresponding to gear wheels 12,13.

The schematic arrangement of Fig. 1 is less suitable for mass production and easy assembly. Figs. 4 and 5 illustrate an alternative to the radial arms 15.

A pressed steel hub 40 comprises a radially inner portion 41 having free ends bent inwardly, radially outwardly, and axially outwardly. The radial portions are typically spot welded back to back to maintain rigidity.

The oppositely directed free ends 43 are crenellated as illustrated so as to be capable of driving engagement with similarly crenellated inner and outer couplers (not illustrated).

The crenellations have the appearance of short splines so that relative axial movement of inner and outer couplers is possible, but the inner and outer couplers are circumferentially fast on the hub 41.

The radially inner side of the hub defines inwardly directed teeth 44 of any suitable kind for spline-like engagement with a drive shaft.

Fig. 4 also illustrates an alternative solid hub 45 defining a radial arm 46 and oppositely directed axial arms 47.

Within the radial portion 42,46, is provided three equispaced windows 48 which open radially through the outer periphery, as illustrated. Within each window 49, inserted from the outside, is a toggle arm 51 having an inner cylindrical end 52 within the window, and an outer cylindrical end radially beyond the outer periphery of the hub. An operating arm 54 extends symmetrically on either side of the outer end 53.

In use the hub 41,45 engages the output shaft at the inner periphery, and the inner and outer couplers at the crenellated outer periphery. Three toggle arms 51 are provided, one in each window, and the operating arms are coupled for movement together by an outer shift ring (not shown). The toggle arms act as previously described to pivot about one or other cylindrical end 52,53 to shift an associated coupler laterally. It will be appreciated that the inner coupler is necessarily in two parts assembled from either axial side of the radial portion 42,46.

Figs. 6-15 show schematically a conventional multi-speed gear transmission, incorporating multiple shift couplers according to the invention in place of the usual selector hubs.

With reference to Fig. 6, an engine crankshaft 61 drives a transmission input shaft 62 via a wet clutch 63. Six gear pairs are provided between two parallel shafts 64,65, with four shift couplers 66 and a double acting synchromesh hub 67. Reverse is provided via idler gear 68. The shift couplers of Fig. 6 are shown in a 'neural' position which, for reasons given above, is in practice avoided.

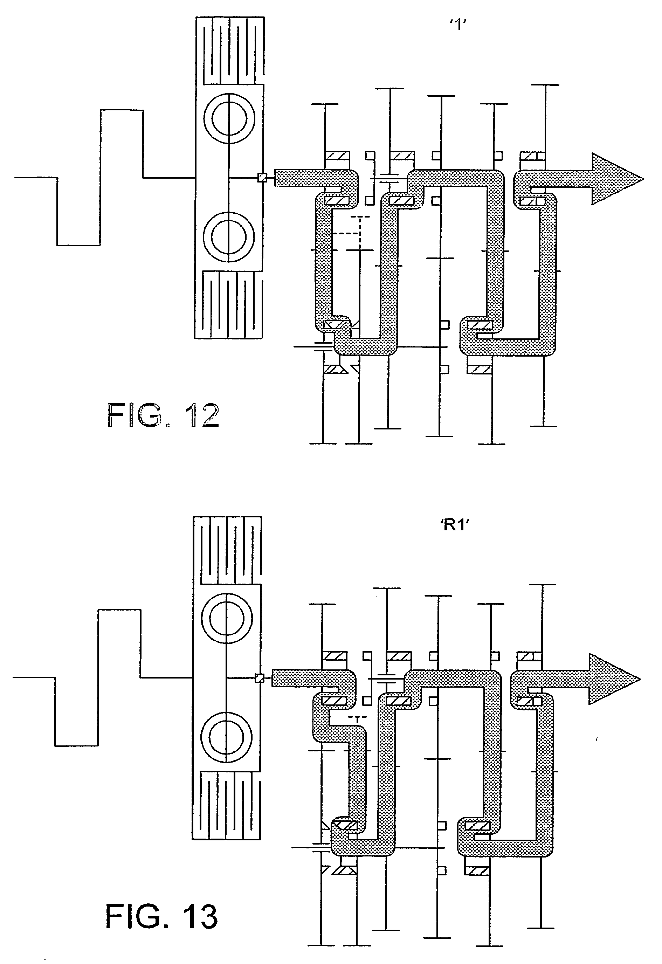

Figs. 7-12 show the torque paths of six forward speeds, and Figs. 13-15 show the torque paths of three reverse speeds.

The shift couplers of Figs. 7-15 can be used to perform a hot shift in the manner previously described, and the general arrangement illustrated is a further aspect of the present invention.

In particular, the input shaft 62 is arranged to drive directly to a co-axial intermediate shaft 69 via a first shift coupler, and from the intermediate shaft 69 directly to a co-axial output shaft 64 via a second shift coupler. Each of these shift couplers is also shiftable axially in the opposite direction to engage a gear pair associated with the layshaft 65. The intermediate shaft 69 has rotatable thereon the driven gears of two gear pairs, and a third shift coupler therebetween to couple these driven gears on demand to the intermediate shaft.

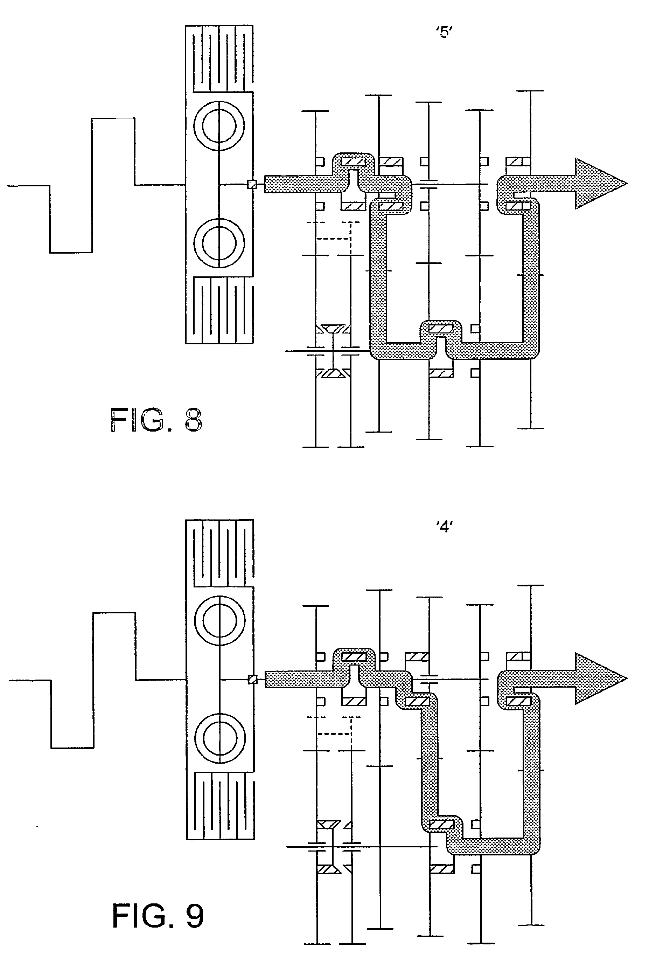

As illustrated, all intermediate forward ratios (that is to say all except 6th ratio) are via the layshaft, as shown particularly in Figs. 8-12.

In this embodiment the layshaft 65 is also divided into two co-axial parts connectable by a shift coupler, two driving gears being associated with each layshaft part.

Fig. 16 shows in transverse section the use of a shift coupler to provide hot shifting between the input shafts of a twin input transmission. Twin input transmissions need not be further described in this specification but are characterized by co-axial input shafts, one input shaft being associated with the 'odd' ratios, and the other with the 'even' ratios. Ratio changes are sequential, and the arrangement allows the next ratio in the sequence to be pre-selected.

An engine crankshaft 30 drives the casing 81 of a multi-plate clutch 82, the output of which drives via a conventional torsional damper 83 to the input member 84 of a switch coupler according to the invention.

A ratio change sleeve 85 for the switch coupler is slidable axially to move a circumferentially spaced array of toggles 86, which in turn can engage one or other annular couplers 87,88 with respective input hubs 89,90 associated with the co-axial input shafts 91,92.

A clutch release sleeve 93 is slidable axially on the ratio change sleeve 85.

In use the switch coupler of the invention allows a dual input transmission to be used with a single clutch of any suitable kind. As illustrated the switch coupler can wholly or at least partially be located within the internal annular space of a clutch, and thus add little to the overall axial length of the transmission.

The switch coupler allows hot shifts between adjacent ratios without the complication of simultaneously releasing and engaging the usual twin clutches of a twin input transmission.

## Claims

1. A shift coupler operable to connect one of two rotary drive members (12,13) to a rotary shaft (11), the shaft and drive members having a common rotary axis and the shift coupler being arranged axially between the drive members, wherein the shift coupler comprises:
a first coupling member (22) rotationally fast with shaft (11) and movable along said axis between said drive members (12,13) to engage one or other drive member for torque transmission;
a second coupling member (23), radially spaced from the first coupling member (22), rotationally fast with said shaft and movable along said axis between said drive members (12,13) to engage one or other drive member for torque transmission;
each coupling member (22,23) being movable to drive one of said drive members (12,13) in one direction, and the other of said drive members in the opposite direction, each drive member (12,13) being drivable in one direction by one of said coupling members (22,23), and in the other direction by the other of said coupling members (22,23);
and the shift coupler further including a shift member (31) movable along said axis and having a toggle (33) pivoted thereon, one end of said toggle (33) engaging one coupling member (22), and the other end of said toggle engaging the other coupling member (23) such that pivoting of the toggle (33) results in relative axial movement of said coupling members.

2. A shift coupler according to claim 1 wherein each coupling member (22,23) comprises opposed rings concentric about the rotary axis thereof and connected by a plurality of tie bars, each ring having axially outwardly facing teeth for engagement with corresponding teeth (25) of the rotary drive members (12,13), and the teeth of each ring having a substantially perpendicular drive face (41) adapted to drive in opposite directions.

3. A shift coupler according to claim 2 wherein the teeth (25) of each ring have a saw-tooth profile.

4. A shift coupler according to any preceding claim wherein said first and second coupling members (22,23) are arranged one within the other in a substantially common plane for connection to one or other drive member (12,13).

5. A shift coupler according to claim 4 and further comprising radial arms (15) rotationally fast with said shaft (11), said arms each having two axially directed apertures (16) and tie bars (24) slidable in said apertures, the opposite ends of said tie bars (24) being in driving connection with said coupling members (22,23).

6. A shift coupler according to claim 5 wherein the apertures (16) of each arm (15) are radially aligned.

7. A shift coupler according to any of claims 1-4 and further comprising an annular shift member surrounding said coupling members (22,23), a plurality of radially inwardly directed arms extending between the rings of each coupling member to support toggles thereon.

8. A shift coupler according to claim 7 wherein said toggles are each arranged for pivoting about a radius of said rotary shaft, each toggle having an outer end engaging one coupling member, and an inner end engaging the other coupling member.

9. A shift coupler according to claim 8 wherein said toggles have substantially cylindrical ends in sliding contact with correspondingly shaped abutments of the respective rings.

10. A shift coupler according to claim 1 and further comprising a hub (41) rotationally fast with said shaft and having oppositely directed axial flanges (43) at the outer periphery thereof, said flanges being circular and crenellated, and said coupling members (22,23) being respectively driven by the radially inner and radially outer surfaces of said crenellations.

11. A transmission incorporating a plurality of shift couplers according to any preceding claim.

12. A twin input shaft transmission having a single driving member for connection to a source of rotary torque, and a shift coupler according to any preceding claim for driving one or other input shaft on demand.

## Patentansprüche

1. Umschaltkupplung, die dazu ausgebildet ist, eines von zwei drehbaren Antriebselementen (12, 13) mit einer Rotationswelle (11) zu verbinden, wobei die Welle und die Antriebselemente eine gemeinsame Rotationsachse aufweisen und die Umschaltkupplung axial zwischen den Antriebselementen angeordnet ist, wobei die Umschaltkupplung umfasst:
ein erstes Kopplungselement (22), das mit der Welle (11) drehfest ist und entlang der Achse zwischen den Antriebselementen (12, 13) verschiebbar ist, um zur Momentübertragung an dem einen oder dem anderen Antriebselement anzugreifen,
ein zweites Kopplungselement (23), das in einem radialen Abstand zum ersten Kopplungselement (22), drehfest mit der Welle und entlang der Achse zwischen den Antriebselementen (12, 13) verschiebbar angeordnet ist, um zur Momentübertragung an dem einen oder dem anderen Antriebselement anzugreifen,
wobei jedes Kopplungselement (22, 23) in der Weise beweglich ist, dass es eines der Antriebselemente (12, 13) in eine Richtung und das andere der Antriebselemente in die entgegengesetzte Richtung antreibt, wobei jedes Antriebselement (12, 13) durch eines der Kopplungselemente (22, 23) in eine Richtung und vom anderen der Kopplungselemente (22, 23) in die andere Richtung antreibbar ist,
und die Umschaltkupplung weiter ein Schaltelement (31) aufweist, das entlang der Achse verschiebbar ist und einen schwenkbar darauf gelagerten Umschalter (33) aufweist, wobei ein Ende des Umschalters (33) an einem Kopplungselement (22) angreift und das andere Ende des Umschalters am anderen Kopplungselement (23) in der Weise angreift, dass ein Umlegen des Umschalters (33) zu einer relativen Axialbewegung der Kopplungselemente führt.

2. Umschaltkupplung nach Anspruch 1, wobei jedes Kopplungselement (22, 23) gegenüberliegende Ringe umfasst, die konzentrisch um die Drehachse angeordnet und mit einer Mehrzahl von Verbindungsstangen verbunden sind, wobei jeder Ring axial nach außen weisende Zähne zum Eingriff mit zugehörigen Zähnen (25) der drehbaren Antriebselemente (12, 13) aufweist und die Zähne jedes Ringes eine im Wesentlichen senkrechte Antriebsfläche (41) aufweisen, die zum Antrieb in entgegengesetzte Richtungen ausgebildet sind.

3. Umschaltkupplung nach Anspruch 2, wobei die Zähne (25) jedes Rings ein Sägezahnprofil aufweisen.

4. Umschaltkupplung nach einem der vorhergehenden Ansprüche, wobei das erste und zweite Kopplungselement (22, 23) zur Verbindung mit dem einen oder dem anderen Antriebselement (12, 13) in einer im Wesentlichen gemeinsamen Ebene ineinander angeordnet sind.

5. Umschaltkupplung nach Anspruch 4 und weiter umfassend radiale Arme (15), die mit der Welle (11) drehfest sind, wobei die Arme jeweils zwei axial gerichtete Öffnungen (16) und in den Öffnungen verschiebbare Verbindungsstangen (24) aufweisen, wobei die entgegengesetzten Enden der Verbindungsstangen (24) mit den Kopplungselementen (22, 23) in Antriebsverbindung stehen.

6. Umschaltkupplung nach Anspruch 5, wobei die Öffnungen (16) jedes Arms (15) radial fluchten.

7. Umschaltkupplung nach einem der Ansprüche 1 bis 4 und die weiter ein ringförmiges Schaltelement, das die Kopplungselemente (22, 23) umgibt, eine Mehrzahl von radial nach innen gerichteten Armen, die sich zwischen den Ringen jedes Kopplungselements erstrecken, wobei sie darauf angeordnete Umschalter tragen, umfasst.

8. Umschaltkupplung nach Anspruch 7, wobei die Umschalter jeweils so ausgebildet sind, dass sie um einen Radius der Rotationswelle schwenkbar sind, wobei jeder Umschalter ein äußeres Ende aufweist, das an einem Kopplungselement angreift, und ein inneres Ende, das am anderen Kopplungselement angreift.

9. Umschaltkupplung nach Anspruch 8, wobei die Umschalter im Wesentlichen zylindrische Enden aufweisen, die sich in Gleitkontakt mit entsprechend gestalteten Anschlägen der zugehörigen Ringe befinden.

10. Umschaltkupplung nach Anspruch 1 und weiter umfassend eine Nabe (41), die mit der Welle drehfest ist und entgegengesetzt gerichtete axiale Flansche (43) an ihrem Außenumfang aufweist, wobei die Flansche kreisförmig und mit Zinnen versehen sind, und die Kopplungselemente (22, 23) jeweils von den radialen Innenflächen und radialen Außenflächen der Zinnen mitgenommen werden.

11. Getriebe, das eine Mehrzahl von Umschaltkupplungen nach einem der vorhergehenden Ansprüche beinhaltet.

12. Doppeleingangswellengetriebe mit einem einzelnen Antriebselement zur Verbindung mit einer Drehmomentquelle und einer Umschaltkupplung nach einem der vorhergehenden Ansprüche zum Antreiben der einen oder der anderen Eingangswelle nach Bedarf.

## Revendications

1. Coupleur de boîte de vitesse prévu pour accoupler un parmi deux éléments rotatifs d'entraînement (12, 13) à un arbre rotatif (11), l'arbre et les éléments d'entraînement ayant un axe rotatif commun et le coupleur de boîte de vitesse étant monté coaxial entre les éléments d'entraînement, dans lequel le coupleur de boîte de vitesse comprend :
• un premier élément d'accouplement (22) fixe en rotation avec l'arbre (11) et déplaçable le long dudit axe entre lesdits éléments d'entraînement (12, 13) pour engager l'un ou l'autre élément d'entraînement pour la transmission du couple de rotation ;
• un second élément d'accouplement (23), radialement éloigné du premier élément d'accouplement (22), fixe en rotation avec ledit arbre et déplaçable le long dudit axe entre lesdits éléments d'entraînement (12, 13) pour engager l'un ou l'autre élément d'entraînement pour la transmission du couple de rotation ;
dans lequel chaque élément d'accouplement (22, 23) est mobile pour entraîner un desdits éléments d'entraînement (12, 13) dans un sens, et l'autre desdits éléments d'entraînement dans le sens opposé, chaque élément d'entraînement (12, 13) pouvant être entraîné dans un sens par un desdits éléments d'accouplement (22, 23), et dans l'autre sens par l'autre desdits éléments d'accouplement (22, 23) ; et
dans lequel le coupleur de boîte de vitesse comprend en outre un baladeur de boîte de vitesse (31) déplaçable le long dudit axe et comportant une articulation (33) pivotante sur celui-ci, une extrémité de ladite articulation (33) engageant un élément d'accouplement (22), et l'autre extrémité de ladite articulation engageant l'autre élément d'accouplement (23) de sorte que le pivotement de l'articulation (33) provoque le déplacement axial relatif desdits éléments d'accouplement.

2. Coupleur de boîte de vitesse selon la revendication 1, dans lequel chaque élément d'accouplement (22, 23) comporte des bagues opposées concentriques autour de l'axe de rotation de celui-ci et reliées par une pluralité de barres d'accouplement, chaque bague présentant des dents dirigées axialement vers l'extérieur pour être engagées avec des dents correspondantes (25) des éléments rotatifs d'entraînement (12, 13), et les dents de chaque bague présentant une face d'entraînement (41) sensiblement perpendiculaire prévue pour entraîner dans des sens opposés.

3. Coupleur de boîte de vitesse selon la revendication 2, dans lequel les dents (25) de chaque bague présentent un profil en dents de scie.

4. Coupleur de boîte de vitesse selon l'une quelconque des revendications précédentes, dans lequel lesdits premier et second éléments d'accouplement (22, 23) sont logés l'un dans l'autre dans un plan sensiblement commun pour l'accouplement à l'un ou l'autre élément d'entraînement (12, 13).

5. Coupleur de boîte de vitesse selon la revendication 4, comportant en outre des bras radiaux (15) fixes en rotation avec ledit arbre (11), lesdits bras présentant chacun deux ouvertures (16) orientées de manière axiale et des traverses (24) qui coulissent dans lesdites ouvertures, les extrémités opposées desdites traverses (24) étant accouplées en entraînement avec lesdits éléments d'accouplement (22, 23).

6. Coupleur de boîte de vitesse selon la revendication 5, dans lequel les ouvertures (16) de chaque bras (15) sont alignées de manière radiale.

7. Coupleur de boîte de vitesse selon l'une quelconque des revendications 1 à 4, comportant en outre un baladeur annulaire de boîte de vitesse entourant lesdits éléments d'accouplement (22, 23), une pluralité de bras orientés radialement vers l'intérieur s'étendant entre les bagues de chaque élément d'accouplement pour supporter des articulations sur ceux-ci.

8. Coupleur de boîte de vitesse selon la revendication 7, dans lequel lesdites articulations sont prévues chacune pour pivoter selon un certain rayon dudit arbre rotatif, chaque articulation présentant une extrémité externe engageant un élément d'accouplement, et une extrémité interne engageant l'autre élément d'accouplement.

9. Coupleur de boîte de vitesse selon la revendication 8, dans lequel lesdites articulations présentent des extrémités sensiblement cylindriques en contact de glissement avec des butées de forme correspondante des bagues respectives.

10. Coupleur de boîte de vitesse selon la revendication 1, comportant en outre un moyeu (41) fixe en rotation avec ledit arbre et présentant des brides axiales orientées de manière opposée (43) sur le pourtour externe de celui-ci, lesdites brides étant circulaires et crénelées, et lesdits éléments d'accouplement (22, 23) étant respectivement entraînés par les faces radiales internes et externes desdits crénelages.

11. Transmission comportant une pluralité de coupleurs de boîte de vitesse selon l'une quelconque des revendications précédentes.

12. Transmission à double arbre d'entrée comportant un seul élément d'entraînement prévu pour être accouplé à une source de couple de rotation, et un coupleur de boîte de vitesse selon l'une quelconque des revendications précédentes, pour entraîner l'un ou l'autre arbre d'entrée sur demande.
